# EUROPEAN PATENT APPLICATION

(11) **EP 4 389 832 A1**
(43) Date of publication of application: **26.06.2024**
(21) Application number: 23217084.5
(22) Date of filing: 15.12.2023
(51) Int. Cl.: C09D 11/101, C09D 11/322, C09D 11/50, C09D 11/38

(54) **ACTIVE ENERGY RAY-CURABLE COMPOSITION, METHOD FOR PRODUCING LUMINOUS CURED PRODUCT, AND LUMINOUS FORMED BODY**

(30) Priority: 23.12.2022 JP 2022206853
(71) Applicant: KONICA MINOLTA, INC., Tokyo 100-7015 (JP)
(72) Inventor: MIYANO, Masashi, Tokyo, 100-7015 (JP); MORI, Hisashi, Tokyo, 100-7015 (JP)
(74) Representative: MFG Patentanwälte Meyer-Wildhagen Meggle-Freund Gerhard PartG mbB

(57) **Abstract**

To provide an active energy ray-curable composition capable of further increasing the luminance of a cured product.

The active energy ray-curable composition of the present invention contains a first monomer that is an active energy ray-curable compound having a refractive index of 1.49 or more and 1.65 or less; and a luminous pigment.

## Description

### Background

### Technological Field

The present invention relates to an active energy ray-curable composition, a method for producing a luminous cured product, and a luminous formed body.

### Description of the Related art

There is known a luminous pigment that absorbs light of a predetermined wavelength, accumulates energy of the light, and emits light of a wavelength different from that of the absorbed light for a long time even after the absorption of the light is stopped (for example, JP 2019-210337 A). There is also known a method in which a liquid composition containing the luminous pigment and a monomer is applied to a base material, and the monomer is cured to produce a luminous cured product (for example, JP 11-140368 A and JP 2013-135192 A).

There is a demand for further increasing the luminance of a luminous cured product. On the other hand, a luminous pigment is generally expensive. Therefore, it is desirable to increase the luminance of a cured product without increasing the amount of the luminous pigment used.

### Summary

The present invention has been made in view of the above circumstances, and an object of the present invention is to provide an active energy ray-curable composition containing a luminous pigment, which can further increase the luminance of the cured product thereof, a method for producing a luminous cured product using the active energy ray-curable composition, and a luminous formed body produced using the active energy ray-curable composition.

To achieve the abovementioned object, according to an aspect of the present invention, an active energy ray-curable composition reflecting one aspect of the present invention comprises: a first monomer that is an active energy ray-curable compound having a refractive index of 1.49 or more and 1.65 or less; and a luminous pigment.

### Detailed Description of Embodiments

Hereinafter, one or more embodiments of the present invention will be described. However, the scope of the invention is not limited to the disclosed embodiments.

### 1. Active energy ray-curable composition

An embodiment of the present invention relates to an active energy ray-curable composition (hereinafter, it is also simply referred to as a "composition") that contains an active energy ray-curable compound (hereinafter, it is also simply referred to as a "monomer") of a monomer that is polymerized or crosslinked by irradiation with an active energy ray and a luminous pigment, and is cured by irradiation with an active energy ray to form a cured product in which the luminous pigment is retained by a resin component formed by polymerization and crosslinking of the monomer. The cured product is a luminous cured product in which the luminous pigment absorbs the irradiated light and emits light of a different wavelength over a long period of time.

Examples of the active energy ray that can be used for curing the composition include an electron beam, an ultraviolet ray, an α ray, a γ ray, and an X-ray. Among them, an ultraviolet ray and an electron beam are preferable, and an ultraviolet ray is more preferable.

Hereinafter, components that can be contained in the composition, physical properties and the like will be described.

### 1-1. Component

### 1-1-1. Monomer

The composition contains a monomer. The monomer is a monomer composed of only a single repeating unit, and is a compound which is liquid at normal temperature. For example, the monomer can be a compound having a molecular weight of 100 or more and 500 or less.

The monomer can be a radical polymerizable monomer or a cationic polymerizable monomer. Among them, a radical polymerizable monomer is preferable.

The radical polymerizable monomer is a monomer having an ethylene unsaturated bond that is radical polymerizable in the molecule. Examples of the monomer having an ethylene unsaturated bond that is radical polymerizable include an unsaturated carboxylic acid and a salt thereof, an unsaturated carboxylic acid ester compound, an unsaturated carboxylic acid urethane compound, an unsaturated carboxylic acid amide compound and an anhydride thereof, acrylonitrile, styrene, an unsaturated polyester, an unsaturated polyether, an unsaturated polyamide, and an unsaturated urethane. Examples of the unsaturated carboxylic acid include (meth)acrylic acid, itaconic acid, crotonic acid, isocrotonic acid, and maleic acid.

The radical polymerizable monomer is preferably an unsaturated carboxylic acid ester or a (meth)acrylate, and more preferably a (meth)acrylate.

Examples of the monofunctional (meth)acrylate include isoamyl (meth)acrylate, stearyl (meth)acrylate, isobornyl (meth)acrylate, lauryl (meth)acrylate, octyl (meth)acrylate, decyl (meth)acrylate, isomyristyl (meth)acrylate, isostearyl (meth)acrylate, 2-phenoxyethyl (meth)acrylate, 2-ethylhexyl-diglycol (meth)acrylate, 2-hydroxybutyl (meth)acrylate, 2-(meth)acryloyloxyethylhexahydrophthalic acid, butoxyethyl (meth)acrylate, ethoxydiethylene glycol (meth)acrylate, methoxydiethylene glycol (meth)acrylate, methoxy polyethylene glycol (meth)acrylate, methoxy propylene glycol (meth)acrylate, o-phenylphenoxyethyl (meth)acrylate, m-phenoxybenzyl (meth)acrylate, cyclic trimethylolpropane formal (meth)acrylate, ethoxylated phenoxy (meth)acrylate, alkoxylated phenol (meth)acrylate, tetrahydrofurfuryl (meth)acrylate, isobornyl (meth)acrylate, 2-hydroxyethyl (meth)acrylate, 2-hydroxypropyl (meth)acrylate, 2-hydroxy-3-phenoxypropyl (meth)acrylate, 2-hydroxy-o-phenylphenol propyl (meth)acrylate, 2-(meth)acryloyloxyethyl succinic acid, 2-(meth)acryloyloxyethyl phthalic acid, 2-(meth)acryloyloxyethyl-2-hydroxyethyl-phthalic acid, and t-butylcyclohexyl (meth)acrylate.

Examples of the polyfunctional (meth)acrylate include bifunctional (meth)acrylates such as triethylene glycol di(meth)acrylate, tetraethylene glycol di(meth)acrylate, polyethylene glycol di(meth)acrylate, dipropylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, tricyclodecane dimethanol diacrylate, dimethylol-tricyclodecane di(meth)acrylate, bisphenol A type di(meth)acrylate, hydroxypivalic acid neopentyl glycol di(meth)acrylate, polytetramethylene glycol di(meth)acrylate, polyethylene glycol diacrylate, dipropylene glycol diacrylate, and tripropylene glycol diacrylate, and trifunctional or higher functional (meth)acrylates such as trimethylolpropane tri(meth)acrylate, pentaerythritol tri(meth)acrylate, pentaerythritol tetra(meth)acrylate, dipentaerythritol hexa(meth)acrylate, ditrimethylolpropane tetra(meth)acrylate, glycerin propoxy tri(meth)acrylate, and pentaerythritol ethoxy tetra(meth)acrylate.

Examples of the cationic polymerizable monomer include an epoxy compound, a vinyl ether compound, and an oxetane compound.

Examples of the epoxy compound include alicyclic epoxy resins such as 3,4-epoxycyclohexylmethyl-3',4'-epoxycyclohexanecarboxylate, bis(3,4-epoxycyclohexylmethyl)adipate, vinylcyclohexene monoepoxide, ε-caprolactone-modified 3,4-epoxycyclohexylmethyl 3',4'-epoxycyclohexanecarboxylate, 1-methyl-4-(2-methyloxiranyl)-7-oxabicyclo[4,1,0]heptane, 2-(3,4-epoxycyclohexyl-5,5-spiro-3,4-epoxy)cyclohexanone-meta-dioxane, and bis(2,3-epoxycyclopentyl)ether, aliphatic epoxy compounds such as diglycidyl ether of 1,4-butanediol, diglycidyl ether of 1,6-hexanediol, triglycidyl ether of glycerin, triglycidyl ether of trimethylolpropane, diglycidyl ether of polyethylene glycol, diglycidyl ether of propylene glycol, polyglycidyl ether of polyether polyols obtained by adding one or more types of alkylene oxides (such as ethylene oxide and propylene oxide) to aliphatic polyhydric alcohols such as ethylene glycol, propylene glycol, and glycerin, and aromatic epoxy compounds such as di- or polyglycidyl ether of bisphenol A or an alkylene oxide adduct thereof, di- or polyglycidyl ether of hydrogenated bisphenol A or an alkylene oxide adduct thereof, and a novolac epoxy resin.

Examples of the vinyl ether compound include monovinyl ether compounds such as ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, n-propyl vinyl ether, isopropyl vinyl ether, isopropenyl ether-o-propylene carbonate, dodecyl vinyl ether, diethylene glycol monovinyl ether, and octadecyl vinyl ether, and di or trivinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, and trimethylolpropane trivinyl ether.

Examples of the oxetane compound include 3-hydroxymethyl-3-methyloxetane, 3-hydroxymethyl-3-ethyloxetane, 3-hydroxymethyl-3-propyloxetane, 3-hydroxymethyl-3-n-butyloxetane, 3-hydroxymethyl-3-phenyloxetane, 3-hydroxymethyl-3-benzyloxetane, 3-hydroxyethy1-3-methyloxetane, 3-hydroxyethyl-3-ethyloxetane, 3-hydroxyethy1-3-propyloxetane, 3 -hydroxyethy1-3-phenyloxetane, 3-hydroxypropyl-3-methyloxetane, 3-hydroxypropyl-3-ethyloxetane, 3-hydroxypropyl-3-propyloxetane, 3-hydroxypropyl-3-phenyloxetane, 3-hydroxybutyl-3-methyloxetane, 1,4 bis{[(3-ethyl-3-oxetanyl)methoxy]methyl}benzene, 3-ethyl-3-(2-ethylhexyloxymethyl)oxetane, and di[1-ethyl(3-oxetanyl)]methyl ether.

### 1-1-1-1. First monomer

The composition contains, as a monomer, a monomer having a refractive index of 1.49 or more and 1.65 or less (hereinafter, it is also simply referred to as a "first monomer"). The composition can contain only one type of first monomers or two or more types of first monomers.

The luminous pigment generally has a refractive index higher than that of a resin component formed by polymerization and crosslinking of monomers. Therefore, light emitted from the luminous pigment is refracted at an interface between the luminous pigment and the resin component due to the difference in the refractive indexes between the luminous pigment and the resin component. According to a new finding of the present inventors, in a cured product produced using a composition as described in JP 11-140368 A or JP 2013-135192 A, light incident on the cured product from the outside is less likely to be sufficiently absorbed by the luminous pigment, and light emitted from the luminous pigment is less likely to be efficiently propagated to the outside of the cured product due to the refraction.

On the other hand, in the present embodiment, in order to increase the refractive index of the resin component of the cured product to suppress the refraction of light at the interface between the luminous pigment and the resin component and to increase the straightness of light at the interface, a first monomer having a higher refractive index is used in the composition. Presumably thereby, light incident from the outside is sufficiently absorbed by the luminous pigment, and light emitted from the luminous pigment travels straight as it is and efficiently propagates to the outside of the cured product. According to a further study by the present inventors, by using a composition containing a compound having a refractive index of 1.49 or more as the first monomer, the luminous efficiency and the extraction efficiency of the emitted light are increased probably by the above action, and the luminance of the cured product can be further increased.

When a compound having an excessively high refractive index is used as the first monomer, the refractive index of the resin component is excessively increased, and light may be reflected at an interface (film surface) between the outside of the cured product and the inside of the cured product. In order to suppress a decrease in the arrival efficiency of light to the luminous pigment and a decrease in the extraction efficiency of light emitted from the luminous pigment due to the reflection on the film surface, in the present embodiment, a compound having a refractive index of 1.65 or less is used as the first monomer.

From the above viewpoint, the refractive index of the first monomer is 1.49 or more and 1.65 or less, preferably 1.49 or more and 1.60 or less, and more preferably 1.49 or more and 1.58 or less.

In the present specification, the refractive index is a value measured for the D line of the sodium spectrum with an Abbe refractometer in accordance with JIS K 0062: 1992.

The composition preferably contains 20% by mass or more and 80% by mass or less of the first monomer based on the total mass. When the content of the first monomer is 20% by mass or more, the refractive index of the resin component can be sufficiently increased, and the luminance of the cured product can be further increased. When the content of the first monomer is 80% by mass or less, the amount of other components can be sufficiently secured, and for example, the amount of the luminous pigment can be sufficiently increased to increase the luminance of the cured product. From the above viewpoint, the content of the first monomer is preferably 35% by mass or more and 70% by mass or less, and more preferably 35% by mass or more and 60% by mass or less based on a total mass of the composition.

As the first monomer, for example, a monomer having an aromatic ring or alicyclic structure can be used.

Among them, a monomer having an aromatic ring is likely to increase the transparency of the resin component, increase the efficiency of light propagation by the resin component, and increase the luminance of the cured product. Therefore, the first monomer preferably includes a monomer having an aromatic ring.

The content of the first monomer having an aromatic ring is preferably 20% by mass or more and 80% by mass or less, and more preferably 30% by mass or more and 70% by mass or less based on a total mass of the composition.

Examples of the first monomer having an aromatic ring include phenol 4EO-modified acrylate, 2-phenoxyethyl acrylate, m-phenoxybenzyl acrylate, EO-modified o-phenylphenol acrylate, bisphenol fluorene diacrylate (A-BPEF), bisphenol A type 10EO-modified diacrylate, bisphenol A type diacrylate, bisphenol A type PO-modified diacrylate, bisphenol A type EO-modified diacrylate, benzyl acrylate, cumylphenoxyethyl acrylate, 2-hydroxy-3-phenoxypropyl acrylate, and 2-hydroxy-o-phenylphenol propyl acrylate.

Examples of the first monomer having an alicyclic structure include tricyclodecane dimethanol diacrylate, dicyclopentenyl acrylate, and dicyclopentanyl acrylate.

The first monomer is not limited to a monomer having an aromatic ring or alicyclic structure. Conversely, not all monomers having an aromatic ring or an alicyclic structure can be the first monomer, and a compound that does not satisfy the requirement of the refractive index even if having an aromatic ring or an alicyclic structure cannot be naturally the first monomer.

In the present specification, "(meth)acryl" means acryl or methacryl, "(meth)acrylate" means acrylate or methacrylate, and "(meth)acryloyl" means acryloyl or methacryloyl. The first monomer which is a (meth)acrylate can have an acryloyl group or a methacryloyl group as a polymerizable functional group, but a monomer having an acryloyl group is preferably contained from the viewpoint of increasing reactivity and curability.

The first monomer can be a monofunctional monomer having only one polymerizable functional group, or can be a polyfunctional monomer having two or three or more polymerizable functional groups. Among them, the monofunctional monomer easily increases the flexibility of the resin component, and even when a cured product is formed on the surface of a flexible base material, the monofunctional monomer easily deforms the cured film following the deformation of the base material. Therefore, the first monomer preferably includes a monofunctional monomer.

The content of the monofunctional first monomer is preferably 20% by mass or more and 80% by mass or less, and more preferably 30% by mass or more and 60% by mass or less based on a total mass of the composition.

The first monomer can be a monomer modified with an alkylene oxide group. The monomer modified with an alkylene oxide group can increase the adhesion of the cured product to various base materials, and can extend the service life of the luminous formed body in which a cured product (luminous cured product) is formed on the surface or inside thereof. In the present specification, the "alkylene oxide group" means an alkylene oxide group having 2 or more and 4 or less carbon atoms. From the viewpoint of more effectively exhibiting the above action, the alkylene oxide group of the first monomer is preferably an ethylene oxide group having 2 carbon atoms. The number of alkylene oxide groups of the first monomer is not particularly limited, and can be 1 or more and 8 or less, is preferably 2 or more and 6 or less, and more preferably 2 or more and 4 or less.

The content of the first monomer modified with an alkylene oxide group is preferably 20% by mass or more and 80% by mass or less, and more preferably 30% by mass or more and 60% by mass or less based on a total mass of the composition.

### 1-1-1-2. Second monomer

The composition can optionally contain a monomer having a refractive index of less than 1.49 (hereinafter, it is also simply referred to as a "second monomer".). The composition can contain only one type of second monomers or two or more types of second monomers. The second monomer increases adhesion of the cured product to a base material.

The blending ratio between the first monomer and the second monomer in the composition is not particularly limited, but the ratio of a total mass of the second monomer to a total mass of the first monomer (second monomer/first monomer) is preferably 0.05 or more and 2.0 or less. By increasing the percentage of the first monomer, the refractive index of the resin component can be sufficiently increased, and the luminance of the cured product can be further increased. By blending a predetermined amount of the second monomer, the adhesion of the cured product to a base material can be also further increased. From the above viewpoints, the ratio is preferably 0.05 or more and 2.0 or less, and more preferably 0.05 or more and 1.7 or less.

The second monomer is preferably a monomer having an alkylene oxide group from the viewpoint of increasing the adhesion of the cured product to various base materials and further extending the service life of the luminous formed body.

The content of the second monomer having an alkylene oxide group is preferably 20% by mass or more and 50% by mass or less, and more preferably 25% by mass or more and 40% by mass or less based on a total mass of the composition. From the viewpoint of increasing the solvent resistance of the cured product, the alkylene oxide group of the second monomer is preferably a propylene oxide group having 3 carbon atoms. The number of alkylene oxide groups of the second monomer is not particularly limited, and can be 1 or more and 10 or less, is preferably 2 or more and 8 or less, and more preferably 2 or more and 6 or less.

From the viewpoint of controlling the refractive index and adjusting other physical properties, the second monomer preferably includes a monomer having no aromatic ring. The amount of the second monomer having no aromatic ring is preferably 50% by mass or more and 100% by mass or less, and more preferably 70% by mass or more and 100% by mass or less based on a total mass of the second monomer.

The second monomer can be a monofunctional monomer having only one polymerizable functional group, or can be a polyfunctional monomer having two or three or more polymerizable functional groups. From the viewpoint of increasing solvent resistance, the second monomer preferably includes a polyfunctional monomer. The amount of the polyfunctional second monomer is preferably 50% by mass or more and 100% by mass or less, and more preferably 70% by mass or more and 100% by mass or less based on a total mass of the second monomer. In particular, from the viewpoint of increasing adhesion, the second monomer having an alkylene oxide group is preferably a polyfunctional monomer.

### 1-1-2. Luminous pigment

A luminous pigment absorbs light having a predetermined wavelength and accumulates energy of light. Then, even after the absorption of light is stopped, the accumulated energy of light is emitted as light having a wavelength different from that of the absorbed light for a long time. That is, the luminous pigment is a pigment that emits phosphorescence. The composition can contain only one type of luminous pigments or two or more types of luminous pigments.

The luminous pigment is not particularly limited as long as it has the above characteristic. Examples of the luminous pigment include those obtained by subjecting a mother crystal which is a metal compound to an activation treatment.

Examples of the mother crystal include sulfides such as zinc sulfide, calcium sulfide, germanium sulfide, strontium sulfide, and yttrium sulfide, metal oxides such as calcium oxide, strontium oxide, barium oxide, alumina, and cerium oxide, and aluminates such as calcium aluminate, strontium aluminate, and barium aluminate. Among them, strontium aluminate (SrAl2O4: Eu, Dy, refractive index: 1.67) is preferable.

Examples of the activator that activates the mother crystal include europium, terbium, yttrium, zirconium, dysprosium, and barium. Among them, europium and dysprosium are preferable.

The peak wavelength of the excitation spectrum of the luminous pigment is preferably 300 nm or more and 400 nm or less. When the peak wavelength of the excitation spectrum of the luminous pigment is in the above range, the luminous pigment can be sufficiently excited by sunlight, and the luminous formed body can be easily adapted to outdoor use.

The peak wavelength of the emission spectrum of the luminous pigment can be, for example, 400 nm or more and 700 nm or less, and is preferably 450 nm or more and 600 nm or less from the viewpoint of further increasing the visibility of the cured product.

The particle size (d 90) at which the cumulative value in the volume-based particle size distribution of the luminous pigment is 90% is not particularly limited, but is preferably 10.0 µm or less, more preferably 8.0 µm or less, and still more preferably 5.0 µm or less. When the composition is used as an inkjet ink, the ejection stability from an inkjet head can be further enhanced when the particle size is 10.0 µm or less. The lower limit value of the particle size is not particularly limited, but is preferably 0.5 µm or more, more preferably more than 1.0 µm, and still more preferably more than 1.5 µm. The particle size of the luminous pigment can be measured by a particle size distribution analyzer (for example, LUMiSizer, manufactured by LUM Japan Co., Ltd.) using Stokes sedimentation method.

The particle size (d 50) at which the cumulative value in the volume-based particle size distribution of the luminous pigment is 50% is not particularly limited, but is preferably 5.0 µm or less, more preferably 4.0 µm or less, and still more preferably 3.0 µm or less. When the composition is used as an inkjet ink, the ejection stability from an inkjet head can be further enhanced when the particle size is 5.0 µm or less. The lower limit value of the particle size is not particularly limited, but is preferably 0.5 µm or more, and more preferably more than 1.0 µm. The particle size of the luminous pigment can be measured by a particle size distribution analyzer (for example, LUMiSizer, manufactured by LUM Japan Co., Ltd.) using Stokes sedimentation method.

The content of the luminous pigment is preferably 10% by mass or more and 50% by mass or less, and more preferably 15% by mass or more and 35% by mass or less based on a total mass of the composition. When the content is 10% by mass or more, the luminance of the cured product can be further improved. When the content is 50% by mass or less, the percentage of polymerizable compounds (first monomer, second monomer and the like) in the composition can be increased, and the curability of the composition and the adhesion of the cured product to a base material can be further increased. When the content is 50% by mass or less, the decrease in ejection stability when the composition is used as an inkjet ink can be suppressed.

### 1-1-3. Pigment dispersant

The luminous pigment can be dispersed with a pigment dispersant. The luminous pigment can be dispersed with only one type of pigment dispersants, or can be dispersed with two or more types of pigment dispersants.

Examples of the pigment dispersant include a carboxylate ester having a hydroxy group, a salt of a long-chain polyaminoamide and a high molecular weight acid ester, a salt of a high molecular weight polycarboxylic acid, a salt of a long chain polyaminoamide and a polar acid ester, a high molecular weight unsaturated acid ester, a high molecular weight copolymer, a modified polyurethane, a modified polyacrylate, a polyether ester anionic activator, a naphthalene sulfonic acid formalin condensate salt, an aromatic sulfonic acid formalin condensate salt, a polyoxyethylene alkyl phosphoric acid ester, a polyoxyethylene nonylphenyl ether, and stearylamine acetate. Examples of commercially available products of the pigment dispersant include Solsperse series (manufactured by Avecia, "Solsperse" is a registered trademark of the company), PB series (manufactured by Ajinomoto Fine-Techno Co., Inc.), and EFKA series (manufactured by BASF, "EFKA" is a registered trademark of the company).

The content of the pigment dispersant is preferably 0.01% by mass or more and 20% by mass or less based on a total mass of the luminous pigment.

### 1-1-4. Photoinitiator

The composition can contain a photoinitiator for initiating polymerization and crosslinking of the polymerizable compound. The composition can contain only one type of photoinitiators or two or more types of photoinitiators. For example, when polymerization and crosslinking is started by irradiation with an electron beam, the composition does not need to contain a photoinitiator.

The photoinitiator can be a radical initiator when the composition contains a radical polymerizable compound, and can be a cationic initiator (photoacid generator) when the composition contains a cationic polymerizable compound.

Examples of the radical polymerization initiator include a hydrogen abstraction type photoinitiator and an intramolecular cleavage type photoinitiator. The hydrogen abstraction type photoinitiator includes an intramolecular hydrogen abstraction type photoinitiator, an intermolecular hydrogen abstraction type photoinitiator and the like.

The composition can contain any of these photoinitiators, but preferably contains an intramolecular hydrogen abstraction type photoinitiator. Because the intramolecular hydrogen abstraction type photoinitiator causes a hydrogen abstraction reaction in the molecule to generate radicals, radicals are less likely to be generated by abstraction of hydrogen from the molecular chain of the polymerizable compound during polymerization. Therefore, the intramolecular hydrogen abstraction type photoinitiator is less likely to cause a crosslinking reaction between molecular chains in which hydrogen has been abstracted to generate radicals, and molecular chains can be efficiently extended. Thus, the intramolecular hydrogen abstraction type photoinitiator can increase the solvent resistance and weatherability of the cured product without decreasing the luminance of the cured product.

The intramolecular hydrogen abstraction type photoinitiator is a photoinitiator that is excited by irradiation with an active energy ray and causes a hydrogen abstraction reaction in the molecule to generate radicals. Examples of the intramolecular hydrogen abstraction type photoinitiator include methyl benzoylformate photoinitiators such as methyl phenylglyoxylate, and oxyphenyl photoinitiators such as a mixture of oxyphenylacetic acid-2-[2-oxo-2-phenylacetoxy-ethoxy]ethyl ester and oxyphenylacetic acid 2-[2-hydroxy-ethoxy]ethyl ester. Among them, a compound having a glyoxylic acid structure such as a methyl benzoylformate photoinitiator is preferable because hydrogen is less likely to be abstracted from the molecular chain of the polymerizable compound during polymerization.

Examples of commercially available products of the intramolecular hydrogen abstraction type photoinitiator include Omnirad MBF and Omnirad 754 (both are manufactured by IGM Resins, and "Omnirad" is a registered trademark of the company).

The intermolecular hydrogen abstraction type photoinitiator is a photoinitiator that is excited by irradiation with an active energy ray such as an ultraviolet ray and abstracts hydrogen from other molecules to generate radicals. Examples of the intermolecular hydrogen abstraction type photoinitiator include benzophenone initiators including benzophenone, methyl o-benzoylbenzoate, 4-phenylbenzophenone, 4,4'-dichlorobenzophenone, hydroxybenzophenone, 4-benzoyl-4'-methyl-diphenylsulfide, acrylated benzophenone, 3,3',4,4'-tetra(t-butylperoxycarbonyl)benzophenone, and 3,3'-dimethyl-4-methoxybenzophenone, and thioxanthone systems including 2-isopropylthioxanthone, 2,4-dimethylthioxanthone, 2,4-diethylthioxanthone, and 2,4-dichlorothioxanthone.

Examples of commercially available products of the intermolecular hydrogen abstraction type photoinitiator include Omnirad 500 (manufactured by IGM Resins) and Speedcure ITX (manufactured by Sartomer, "Speedcure" is a registered trademark of Arkema France).

Examples of the intramolecular cleavage type photoinitiator include acetophenone initiators such as 2-hydroxy-2-methyl-1-phenylpropan-1-one, benzyl dimethyl ketal, 4-(2-hydroxyethoxy)phenyl-(2-hydroxy-2-propyl)ketone, 1-hydroxycyclohexyl-phenyl ketone, 2-methyl-2-morpholino(4-methylthiophenyl)propan-1-one, and 2-benzyl-2-dimethylamino-1-(4-morpholinophenyl)-butanone; benzoin initiators such as benzoin, benzoin methyl ether, and benzoin isopropyl ether; and acylphosphine oxide initiators such as 2,4,6-trimethylbenzoin diphenylphosphine oxide and bis(2,4,6-trimethylbenzoin)phenylphosphine oxide.

Examples of commercially available products of the intramolecular cleavage type photoinitiator include Omnirad 127, Omnirad 184, Omnirad 651, Omnirad 2959, Omnirad 819, and Esacure One (all manufactured by IGM Resins).

Among these intramolecular cleavage type photoinitiators, acylphosphine oxide initiators are preferable. Acylphosphine oxide initiators have a photobleaching property (shift in absorption spectrum when irradiated with an active energy ray), and thus yellowing due to residues is less likely to occur. Therefore, acylphosphine oxide initiators easily increases the curability of the composition without decreasing the luminance.

From the above viewpoint, the composition preferably contains an intramolecular hydrogen abstraction type photoinitiator, and from the viewpoint of increasing the curing efficiency, the composition preferably further contains an intramolecular cleavage type photoinitiator, particularly an acylphosphine oxide photoinitiator. The content of the intramolecular cleavage type photoinitiator (particularly, acylphosphine oxide photoinitiator) at this time is preferably more than 0% by mass and 3% by mass or less, and more preferably more than 0% by mass and 1.5% by mass or less based on a total mass of the composition from the viewpoint of achieving both improvement in curing efficiency and suppression of decrease in luminance due to residues of the intramolecular cleavage type photoinitiator.

The composition can contain an intermolecular hydrogen abstraction type photoinitiator alone or in combination with other types of photoinitiators, but the amount thereof is preferably small from the viewpoint of suppressing a decrease in luminance due to yellowing. For example, the content of the intermolecular hydrogen abstraction type photoinitiator at this time is preferably 0% by mass or more and 0.8% by mass or less, and more preferably 0% by mass or more and 0.4% by mass or less based on a total mass of the composition.

Examples of the cationic photoinitiator include a photoacid generator. Examples of the photoacid generator include B(C6F5)4⁻, PF6⁻, AsF6⁻, SbF6⁻, and CF3SO3⁻ salts of aromatic onium compounds including diazonium, ammonium, iodonium, sulfonium, and phosphonium, sulfonides that generate sulfonic acid, halides that generate hydrogen halide, and iron allene complexes.

The molecular weight of the photoinitiator is preferably 150 or more and 500 or less, and more preferably 150 or more and 190 or less. When the molecular weight is 150 or more, the ejection stability when the composition is used as an inkjet ink can be improved, and when the molecular weight is 500 or less, the mobility of the molecule of the photoinitiator in the composition can be increased, the polymerization of the polymerizable compound can be easily initiated even in the vicinity of the base material, and the curability of the cured product can be increased.

The content of the photoinitiator is preferably 3% by mass or more and 20% by mass or less, more preferably 3% by mass or more and 15% by mass or less, still more preferably 3% by mass or more and 10% by mass or less, and particularly preferably 5% by mass or more and 10% by mass or less based on a total mass of the composition. When the content is 3% by mass or more, curability and adhesion of the composition can be further increased. When the content is 15% by mass or less, the luminance of the cured product can be further increased.

From the viewpoint of more efficiently exhibiting the effect of improving solvent resistance and weatherability (particularly, the effect of improving weatherability) by the intramolecular hydrogen abstraction type photoinitiator described above, the content of the intramolecular hydrogen abstraction type photoinitiator is preferably 5% by mass or more and 15% by mass or less, and more preferably 6% by mass or more and 10% by mass or less based on a total mass of the composition.

### 1-1-5. Other components

The composition can further contain other components such as polymerizable compounds other than monomers such as a polymerizable oligomer and a polymerizable prepolymer, a non-luminous pigment, a surfactant, a fluorescent brightener, and a polymerization inhibitor.

Examples of the polymerizable oligomer and the polymerizable prepolymer include a reaction product (epoxy acrylate or the like) of a phenol novolac epoxy resin, a phenol cresol epoxy resin, a bisphenol A epoxy resin, a bisphenol F epoxy resin, or other various epoxy resins with an unsaturated vinyl compound, and a compound obtained by further reacting these with polyvalent carboxylic acid or anhydride thereof to be oligomerized. Other examples of the polymerizable oligomer and the polymerizable prepolymer include a prepolymer obtained by introducing a vinyl group such as a (meth)acryloyl group into a polyester and the like, and a prepolymer obtained by reacting a compound having a vinyl group such as a (meth)acryloyl group, a carboxyl group, a hydroxyl group and the like with another compound to form polyurethane (meth)acrylate, polyether (meth)acrylate, or polyester (meth)acrylate.

The content of the polymerizable oligomer and the polymerizable prepolymer is preferably 1% by mass or more and 20% by mass or less, and more preferably 3% by mass or more and 15% by mass or less based on a total mass of the composition.

Examples of the non-luminous pigment include a red pigment, a yellow pigment, a blue pigment, and a white pigment that can be used in an image forming ink. As these pigments, known pigments can be used.

Examples of the surfactant include anionic surfactants such as a dialkyl sulfosuccinate, an alkylnaphthalene sulfonate, and a fatty acid salt, nonionic surfactants such as a polyoxyethylene alkyl ether, a polyoxyethylene alkyl allyl ether, an acetylene glycol, and a polyoxyethylene/polyoxypropylene block copolymer, cationic surfactants such as an alkylamine salt and a quaternary ammonium salt, and silicone or fluorine surfactants.

The content of the surfactant is not particularly limited, but the content can be, for example, 0.001% by mass or more and less than 1.0% by mass based on a total mass of the composition.

Examples of the polymerization inhibitor include an N-oxyl polymerization inhibitor, a phenol polymerization inhibitor, a quinone polymerization inhibitor, an amine polymerization inhibitor, and a copper dithiocarbamate polymerization inhibitor. Only one type of polymerization inhibitors can be contained in the ink, or two or more polymerization inhibitors can be contained in combination.

Examples of the N-oxyl polymerization inhibitor include 4-hydroxy-2,2,6,6-tetramethylpiperidine-N-oxyl (TEMPO), 4-hydroxy-2,2,6,6-tetramethyl-piperidine-N-oxyl, 4-oxo-2,2,6,6-tetramethyl-piperidine-N-oxyl, 4-methoxy-2,2,6,6-tetramethyl-piperidine-N-oxyl, and 4-acetoxy-2,2,6,6-tetramethyl-piperidine-N-oxyl. Examples of commercially available products of the N-oxyl polymerization inhibitor include Irgastab UV 10 (manufactured by BASF ("Irgastab" is a registered trademark of the company)).

Examples of the phenol polymerization inhibitor include 2,6-di-tert-butylphenol, 2,4-di-tert-butylphenol, 2-tert-butyl 4,6-dimethylphenol, 2,6-di-tert-butyl-4-methylphenol, 2,4,6-tri-tert-butylphenol, 2,6-di-t-butyl-p-cresol (butylated hydroxy toluene: BHT), 4-methoxyphenol, and 2-methoxy-4-methylphenol.

Examples of the quinone polymerization inhibitor include hydroquinone, methoxyhydroquinone, benzoquinone, 1,4-naphthoquinone, and p-tert-butylcatechol.

Examples of the amine polymerization inhibitor include alkylated diphenylamine, N,N'-diphenyl-p-phenylenediamine, and phenothiazine.

Examples of the copper dithiocarbamate polymerization inhibitor include copper dimethyldithiocarbamate, copper diethyldithiocarbamate, and copper dibutyldithiocarbamate.

The content of the polymerization inhibitor is not particularly limited, but the content can be, for example, 0.01% by mass or more and 0.5% by mass or less based on a total mass of the composition.

### 1-2. Physical properties

The viscosity of the composition is not particularly limited, but when the composition is used as an inkjet ink to be applied to a base material by an inkjet method, the viscosity at 25°C is preferably 5 mPa · s or more and 100 mPa · s or less in order to increase ejection stability.

The viscosity of the composition at 25°C can be determined by a rheometer under the condition of a shear rate of 1000/sec. Specifically, the viscosity can be determined by heating the ink to 25°C and measuring the viscosity under the condition of a shear rate of 1000/sec. As the rheometer, a stress-controlled rheometer Physica MCR series manufactured by Anton Paar GmbH can be used. The cone plate can have a diameter of 75 mm and a cone angle of 1.0 °.

When the composition is applied to a base material with a dispenser, the viscosity at 25°C is preferably 1 mPa • s or more and 35 000 mPa • s or less.

### 1-3. Method for preparing composition

The composition can be prepared by mixing the components described above. At this time, it is preferable that components other than the luminous pigment be mixed first, and the luminous pigment be added later to the obtained mixture.

When the composition contains a pigment dispersant, a pigment dispersion liquid containing a luminous pigment and a pigment dispersant can be prepared in advance, and the remaining components can be added thereto and mixed. At this time, in order to increase the solubility of the pigment dispersant and the like, the pigment dispersion liquid is preferably prepared by mixing the pigment and the dispersant and the like while heating them.

### 2. Method for producing luminous cured product

The composition described above can be used to form a luminous cured product on the surface or the inside of a base material by applying the composition to the surface or the inside of the base material and curing the composition.

The application of the composition can be performed using a roll coater, a spin coater or the like, can be performed by various printing methods such as a screen printing method, or can be performed by an inkjet method or a method of applying droplets using a dispenser. Among them, from the viewpoint of more precisely forming a cured product at a desired position on a base material, an inkjet method and a method using a dispenser are preferable, and an inkjet method is more preferable.

When an ink is applied to a base material by an inkjet method, the method of ejection from an inkjet head can be an on-demand method or a continuous method. The on-demand type inkjet head can be any of, for example, electromechanical conversion types such as a single cavity type, a double cavity type, a bender type, a piston type, a shear mode type, and a shared wall type, and electrothermal conversion types such as a thermal inkjet type and a bubble jet type ("bubble jet" is a registered trademark of Canon Inc.).

The type of the base material is not particularly limited, but can be, for example, an ABS resin plate, an acrylic resin plate, an aluminum plate, a glass plate, a polycarbonate plate, cloth or the like. The shape of the base material is not particularly limited, and can be a plate shape, a film shape, a sheet shape, or various three-dimensional shapes. The composition can be applied to a space formed inside the base material by various methods.

Thereafter, the applied composition is irradiated with an active energy ray to cure the composition.

The active energy ray can be selected from, for example, an electron beam, an ultraviolet ray, an α ray, a γ ray, an X-ray and the like, but is preferably an ultraviolet ray or an electron beam. The ultraviolet ray is preferably light having a peak wavelength at 360 nm or more and 410 nm or less. The ultraviolet ray is preferably emitted from an LED light source. Because LED has less radiant heat than a conventional light source (for example, a metal halide lamp), when LED is used, the ink is less likely to be melted at the time of irradiation with an active energy ray, and uneven gloss or the like is less likely to be generated.

When an ultraviolet ray is used as an active energy ray, the amount of light per irradiation is preferably 500 mJ/cm² or more and 4000 mJ/cm² or less. When the amount is 500 mJ/cm² or more, curability of the cured product to be formed can be further improved. When the amount is 4000 mJ/cm² or less, discoloration of the cured product can be suppressed.

When a thick luminous cured product is produced, the thickness of the luminous cured product is preferably increased by repeating the application of the composition and curing by irradiation with an active energy ray described above.

After the luminous cured product is produced in this manner, a protective film covering the luminous cured product can be formed with a varnish agent, a laminate film, an ink or the like, or the luminous cured product can be post-processed into a desired shape.

### 3. Luminous formed body

By the above method, a luminous formed body having a base material and a luminous cured product formed on the surface or inside of the base material can be obtained.

The thickness of the luminous cured product is not particularly limited, but is preferably 300 µm or more and 2000 µm or less. When the thickness of the luminous cured product is 300 µm or more, more luminous pigment can be contained in the cured product, and the luminance of the luminous cured product can be further increased. When the thickness of the luminous cured product is 2000 µm or less, the cured product is easily adapted to the post-processing such as lamination.

The luminous formed body can be used as various printed matters, luminous plates, sign panels, labels, other information display devices and the like.

### Examples

Hereinafter, the present invention will be specifically described with reference to Examples, but the scope of the present invention is not limited to the description of Examples.

### 1. Preparation of compositions 1 to 34

Compositions 1 to 34, which are all active energy ray-curable compositions and also inkjet inks, were prepared using the following materials.

### (First monomer)

Monomer 1-1: tricyclodecane dimethanol diacrylate (refractive index: 1.51)
Monomer 1-2: bisphenol A type 10EO-modified diacrylate (manufactured by Sartomer, SR 602 NS, refractive index: 1.51)
Monomer 1-3: phenol 4EO-modified acrylate (manufactured by MIWON, M144, refractive index: 1.50)
Monomer 1-4: 2-phenoxyethyl acrylate (refractive index: 1.52)
Monomer 1-5: m-phenoxybenzyl acrylate (refractive index: 1.57)
Monomer 1-6: 1EO-modified o-phenylphenol acrylate (manufactured by SHIN-NAKAMURA CHEMICAL CO, LTD., A-LEN-10, refractive index: 1.58)
Monomer 1-7: bisphenol fluorene diacrylate (manufactured by Osaka Gas Chemicals Co., Ltd., A-BPEF, refractive index: 1.62)

### (Second monomer)

Monomer 2-1: 1,6-hexanediol diacrylate (refractive index: 1.46)
Monomer 2-2: trimethylolpropane triacrylate (refractive index: 1.47)
Monomer 2-3: dipropylene glycol diacrylate (refractive index: 1.45)
Monomer 2-4: polyethylene glycol (200) diacrylate (manufactured by Sartomer, SR 259, refractive index: 1.46)

### (Other monomers)

Monomer 2-5: bifunctional acrylate having a fluorene structure (manufactured by Osaka Gas Chemicals Co., Ltd., OGSOL EA-HR039, refractive index: 1.68)

### (Luminous pigment)

Luminous pigment 1: LumiNova G-300 FF, manufactured by Nemoto &Co., Ltd. ("LumiNova" is a registered trademark of the company, refractive index: 1.67)
Luminous pigment 2: LumiNova GLL-300 F, manufactured by Nemoto &Co., Ltd. (refractive index: 1.67)

### (Pigment dispersant)

Pigment dispersant: EFKAPX 4701, manufactured by BASF

### (Photoinitiator)

Initiator 1: Omnirad MBF, manufactured by IGM Resins B.V. (intramolecular hydrogen abstraction type)
Initiator 2: Omnirad 754, manufactured by IGM Resins B.V. (intramolecular hydrogen abstraction type)
Initiator 3: Omnirad 819, manufactured by IGM Resins B.V. (intramolecular cleavage type)
Initiator 4: Omnirad 651, manufactured by IGM Resins B.V. (intramolecular cleavage type)
Initiator 5: 2-isopropylthioxanthone (ITX) (intermolecular hydrogen abstraction type)

### (Polymerization inhibitor)

Polymerization inhibitor: Irgastab UV-10, manufactured by BASF

The refractive index of each monomer is a value measured at the D line of the sodium spectrum with an Abbe refractometer in accordance with JIS K 0062: 1992.

### 1-1. Preparation of pigment dispersion liquid

### 1-1-1. Preparation of pigment dispersion liquid A

49 parts by mass of the luminous pigment 1, 1 part by mass of the pigment dispersant, and 50 parts by mass of the monomer 2-1 were put in a polypropylene container together with 50 parts by mass of zirconia beads having an average particle diameter of 0.3 mm, and were subjected to a dispersion treatment for 30 minutes using a paint shaker, and the zirconia beads were removed to prepare a pigment dispersion liquid A.

### 1-1-2. Preparation of pigment dispersion liquid B

A pigment dispersion liquid B was prepared in the same manner as in the preparation of the pigment dispersion liquid A except that the monomer 1-4 was used instead of the monomer 2-1.

### 1-1-3. Preparation of pigment dispersion liquid C

A pigment dispersion liquid C was prepared in the same manner as in the preparation of the pigment dispersion liquid A except that the monomer 2-3 was used instead of the monomer 2-1.

### 1-1-4. Preparation of pigment dispersion liquid D

A pigment dispersion liquid D was prepared in the same manner as in the preparation of the pigment dispersion liquid C except that the luminous pigment 2 was used instead of the luminous pigment 1.

### 1-2. Preparation of compositions 1 to 34

30.0 parts by mass of the monomer 1-1, 26.0 parts by mass of the monomer 2-1, 2.9 parts by mass of the initiator 3, 1.0 parts by mass of the initiator 5, and 0.1 parts by mass of the polymerization inhibitor were sufficiently mixed with a triple roll. 40 parts by mass of the pigment dispersion liquid A was added to the resulting mixture, and the mixture was further mixed with a triple roll. Thereafter, the resulting product was filtered through a 30 µm polypropylene pleat filter (manufactured by ROKI TECHNO CO.,LTD.) to obtain a composition 1.

Compositions 2 to 34 were obtained in the same manner as in the preparation of the composition 1 except that the types of the materials used for the preparation of the compositions and the amounts thereof were changed as described in Tables 1 to 4. The amount of each component in Tables 1 to 4 is expressed in parts by mass. The "second monomer/first monomer" indicates the ratio of a total mass of the second monomer to a total mass of the first monomer (second monomer/first monomer), and the "AO polyfunctional (second)/composition" indicates the content (unit: % by mass) of the polyfunctional second monomer having an alkylene oxide group in each composition.

**[Table 1]**

| Component | Material | | | | | Composition 1 | Composition 2 | Composition 3 | Composition 4 | Composition 5 | Composition 6 | Composition 7 | Composition 8 | Composition 9 | Composition 10 | Composition 11 | Composition 12 |
|---|---|---|---|---|---|---|---|---|---|---|---|---|---|---|---|---|---|
| | Monomer | Refractive index | Aromatic ring | A0-Modification | Number of functional groups | | | | | | | | | | | | |
| First monomer | 1-1 | 1.51 | No | No | Bifunctional | 30.0 | | | | | | | | | | | |
| | 1-2 | 1.51 | Yes | EO | Bifunctional | | 30.0 | | | | | | | | | | |
| | 1-3 | 1.50 | Yes | EO | Monofunctional | | | 30.0 | | | | | | | | 30.0 | |
| | 1-4 | 1.52 | Yes | No | Monofunctional | | | | 30.0 | | | | 40.0 | 50.0 | 50.0 | | 50.0 |
| | 1-5 | 1.57 | Yes | No | Monofunctional | | | | | 30.0 | | | | | | | |
| | 1-6 | 1.58 | Yes | EO | Monofunctional | | | | | | 30.0 | | | | | | |
| | 1-7 | 1.62 | Yes | No | Bifunctional | | | | | | | 30.0 | | | | | 6.0 |
| Second monomer | 2-1 | 1.46 | No | No | Bifunctional | 26.0 | 26.0 | 26.0 | 26.0 | 26.0 | 26.0 | 26.0 | 16.0 | 6.0 | 6.0 | 26.0 | |
| | 2-2 | 1.47 | No | No | Trifunctional | | | | | | | | | | | | |
| | 2-3 | 1.45 | No | PO | Bifunctional | | | | | | | | | | | | |
| | 2-4 | 1.46 | No | EO | Bifunctional | | | | | | | | | | | | |
| Another monomer | 2-5 | 1.68 | Yes | - | Bifunctional | | | | | | | | | | | | |
| Photoinitiator | Initiator 1 (intramolecular hydrogen abstraction type) | | | | | | | | | | | | | | | | |
| | Initiator 2 (intramolecular hydrogen abstraction type) | | | | | | | | | | | | | | | | |
| | Initiator 3 (cleavage type) | | | | | 2.9 | 2.9 | 2.9 | 2.9 | 2.9 | 2.9 | 2.9 | 2.9 | 2.9 | 2.9 | | 2.9 |
| | Initiator 4 (cleavage type) | | | | | | | | | | | | | | | 2.9 | |
| | Initiator 5 (intermolecular hydrogen abstraction type) | | | | | 1.0 | 1.0 | 1.0 | 1.0 | 1.0 | 1.0 | 1.0 | 1.0 | 1.0 | 1.0 | 1.0 | 1.0 |
| Pigment dispersion liquid | Pigment dispersion liquid A | | | | | 40.0 | 40.0 | 40.0 | 40.0 | 40.0 | 40.0 | 40.0 | 40.0 | 40.0 | | 40.0 | |
| | Pigment dispersion liquid B | | | | | | | | | | | | | | 40.0 | | 40.0 |
| | Pigment dispersion liquid C | | | | | | | | | | | | | | | | |
| Polymerization inhibitor | Polymerization inhibitor | | | | | 0.1 | 0.1 | 0.1 | 0.1 | 0.1 | 0.1 | 0.1 | 0.1 | 0.1 | 0.1 | 0.1 | 0.1 |
| Total | | | | | | 100.0 | 100.0 | 100.0 | 100.0 | 100.0 | | 100.0 | 100.0 | 100.0 | 100.0 | 100.0 | 100.0 |
| Second monomer/First monomer | | | | | | 1.53 | 1.53 | 1.53 | 1.53 | 1.53 | 1.53 | 1.53 | 0.90 | 0.52 | 0.09 | 1.53 | 0.00 |
| AO polyfunctional (second)/composition (% by mass) | | | | | | 0.0 | 0.0 | 0.0 | 0.0 | 0.0 | 0.0 | 0.0 | 0.0 | 0.0 | 0.0 | 0.0 | 0.0 |

**[Table 2]**

| Component | Material | | | | | Composition 13 | Composition 14 | Composition 15 | Composition 16 | Composition 17 | Composition 18 | Composition 19 | Composition 20 | Composition 21 | Composition 22 | Composition 23 | Composition 24 |
|---|---|---|---|---|---|---|---|---|---|---|---|---|---|---|---|---|---|
| | Monomer | Refractive index | Aromatic ring | AO-Modification | Number of functional groups | | | | | | | | | | | | |
| First monomer | 1-1 | 1.51 | No | No | Bifunctional | | | | | | | | | | | | |
| | 1-2 | 1.51 | Yes | EO | Bifunctional | | | | | | | | | | | | |
| | 1-3 | 1.50 | Yes | EO | Monofunctional | | | | | | | | | | | 30.0 | 30.0 |
| | 14 | 1.52 | Yes | No | Monofunctional | 30.0 | 30.0 | 30.0 | 30.0 | 30.0 | 30.0 | 30.0 | 30.0 | 30.0 | 30.0 | | |
| | 1-5 | 1.57 | Yes | No | Monofunctional | | | | | | | | | | | | |
| | 1-6 | 1.58 | Yes | EO | Monofunctional | | | | | | | | | | | | |
| | 1-7 | 1.62 | Yes | No | Bifunctional | | | | | | | | | | | | |
| Second monomer | 2-1 | 1.46 | No | No | Bifunctional | | | | | | | | | | | | |
| | 2-2 | 1.47 | No | No | Trifunctional | | | | | | | | | | | | |
| | 2-3 | 1.45 | No | PO | Bifunctional | 26.0 | | 26.0 | 26.0 | 21.0 | 18.0 | 14.0 | 19.9 | 20.4 | 20.9 | 20.9 | 20.9 |
| | 24 | 1.46 | No | EO | Bifunctional | | 26.0 | | | | | | | | | | |
| Another monomer | 2-5 | 1.68 | Yes | - | Bifunctional | | | | | | | | | | | | |
| Photoinitiator | Initiator 1 (intramolecular hydrogen abstraction type) | | | | | | | | | 5.0 | 8.0 | 12.0 | 8.0 | 8.0 | 8.0 | 8.0 | |
| | Initiator 2 (intramolecular hydrogen abstraction type) | | | | | | | | | | | | | | | | 8.0 |
| | Initiator 3 (cleavage type) | | | | | 2.9 | 2.9 | 2.9 | 2.9 | 2.9 | 2.9 | 2.9 | 1.0 | 1.0 | 1.0 | 1.0 | 1.0 |
| | Initiator 4 (cleavage type) | | | | | | | | | | | | | | | | |
| | Initiator 5 (intermolecular hydrogen abstraction type) | | | | | 1.0 | 1.0 | 1.0 | 1.0 | 1.0 | 1.0 | 1.0 | 1.0 | 0.5 | 0.0 | 0.0 | 0.0 |
| Pigment dispersion liquid | Pigment dispersion liquid A | | | | | 40.0 | 40.0 | | | | | | | | | | |
| | Pigment dispersion liquid B | | | | | | | 40.0 | | | | | | | | | |
| | Pigment dispersion liquid C | | | | | | | | 40.0 | 40.0 | 40.0 | 40.0 | 40.0 | 40.0 | 40.0 | 40.0 | 40.0 |
| Polymerization inhibitor | Polymerization inhibitor | | | | | 0.1 | 0.1 | 0.1 | 0.1 | 0.1 | 0.1 | 0.1 | 0.1 | 0.1 | 0.1 | 0.1 | 0.1 |
| Total | | | | | | 100.0 | 100.0 | 100.0 | 100.0 | 100.0 | 100.0 | 100.0 | 100.0 | 100.0 | 100.0 | 100.0 | 100.0 |
| Second monomer/First monomer | | | | | | 1.53 | 1.53 | 0.52 | 1.53 | 1.37 | 1.27 | 1.13 | 1.33 | 1.35 | 1.36 | 1.36 | 1.36 |
| AO polyfunctional (second)fcomposition (% by mass) | | | | | | 26.0 | 26.0 | 26.0 | 46.0 | 41.0 | 38.0 | 34.0 | 39.9 | 40.4 | 40.9 | 40.9 | 40.9 |

**[Table 3]**

| Component | Material | | | | | Composition 25 | Composition 26 | Composition 27 | Composition 28 | Composition 29 |
|---|---|---|---|---|---|---|---|---|---|---|
| | Monomer | Refractive index | Aromatic ring | AO-Modification | Number of functional groups | | | | | |
| First monomer | 1-1 | 1.51 | No | No | Bifunctional | | | | | |
| | 1-2 | 1.51 | Yes | EO | Bifunctional | | | | | |
| | 1-3 | 1.50 | Yes | EO | Monofunctional | 30.0 | 30.0 | 30.0 | 30.0 | 40.0 |
| | 1-4 | 1.52 | Yes | No | Monofunctional | | | | | |
| | 1-5 | 1.57 | Yes | No | Monofunctional | | | | | |
| | 1-6 | 1.58 | Yes | EO | Monofunctional | | | | | |
| | 1-7 | 1.62 | Yes | No | Bifunctional | | | | | |
| Second monomer | 2-1 | 1.46 | No | No | Bifunctional | | | | | |
| | 2-2 | 1.47 | No | No | Trifunctional | | | | | |
| | 2-3 | 1.45 | No | PO | Bifunctional | 26.0 | 26.0 | 20.9 | 10.9 | 0.9 |
| | 2-4 | 1.46 | No | EO | Bifunctional | | | | | |
| Another monomer | 2-5 | 1.68 | Yes | - | Bifunctional | | | | | |
| Photoinitiator | Initiator 1 (intramolecular hydrogen abstraction type) | | | | | | | 8.0 | 8.0 | 8.0 |
| | Initiator 2 (intramolecular hydrogen abstraction type) | | | | | | | | | |
| | Initiator 3 (cleavage type) | | | | | 2.9 | 2.9 | 1.0 | 1.0 | 1.0 |
| | Initiator 4 (cleavage type) | | | | | | | | | |
| | Initiator 5 (intermolecular hydrogen abstraction type) | | | | | 1.0 | 1.0 | 0.0 | 0.0 | 0.0 |
| Pigment dispersion liquid | Pigment dispersion liquid A | | | | | 40.0 | | | | |
| | Pigment dispersion liquid B | | | | | | | | | |
| | Pigment dispersion liquid C | | | | | | 40.0 | | 50.0 | 50.0 |
| | Pigment dispersion liquid D | | | | | | | 40.0 | | |
| Polymerization inhibitor | Polymerization inhibitor | | | | | 0.1 | 0.1 | 0.1 | 0.1 | 0.1 |
| Total | | | | | | 100.0 | 100.0 | 100.0 | 100.0 | 100.0 |
| Second monomer/First monomer | | | | | | 1.53 | 1.53 | 1.36 | 1.20 | 0.65 |
| AO polyfunctional (second)/composition (% by mass) | | | | | | 26.0 | 46.0 | 20.9 | 35.9 | 25.9 |

**[Table 4]**

| Component | Material | | | | | Composition 30 | Composition 31 | Composition 32 | Composition 33 | Composition 34 |
|---|---|---|---|---|---|---|---|---|---|---|
| | Monomer | Refractive index | Aromatic ring | AO-Modification | Number of functional groups | | | | | |
| First monomer | 1-1 | 1.51 | No | No | Bifunctional | | | | | |
| | 1-2 | 1.51 | Yes | EO | Bifunctional | | | | | |
| | 1-3 | 1.50 | Yes | EO | Monofunctional | | | | | |
| | 1-4 | 1.52 | Yes | No | Monofunctional | | | | | |
| | 1-5 | 1.57 | Yes | No | Monofunctional | | | | | |
| | 1-6 | 1.58 | Yes | EO | Monofunctional | | | | | |
| | 1-7 | 1.62 | Yes | No | Bifunctional | | | | | |
| Second monomer | 2-1 | 1.46 | No | No | Bifunctional | 56.0 | | | | 26.0 |
| | 2-2 | 1.47 | No | No | Trifunctional | | 56.0 | | | |
| | 2-3 | 1.45 | No | PO | Bifunctional | | | 56.0 | | |
| | 2-4 | 1.46 | No | EO | Bifunctional | | | | 56.0 | |
| Another monomer | 2-5 | 1.68 | Yes | - | Bifunctional | | | | | 30.0 |
| Photoinitiator | Initiator 1 (intramolecular hydrogen abstraction type) | | | | | | | | | |
| | Initiator 2 (intramolecular hydrogen abstraction type) | | | | | | | | | |
| | Initiator 3 (cleavage type) | | | | | 2.9 | 2.9 | 2.9 | 2.9 | 2.9 |
| | Initiator 4 (cleavage type) | | | | | | | | | |
| | Initiator 5 (intermolecular hydrogen abstraction type) | | | | | 1.0 | 1.0 | 1.0 | 1.0 | 1.0 |
| Pigment dispersion liquid | Pigment dispersion liquid A | | | | | 40.0 | 40.0 | 40.0 | 40.0 | 40.0 |
| | Pigment dispersion liquid B | | | | | | | | | |
| | Pigment dispersion liquid C | | | | | | | | | |
| Polymerization inhibitor | Polymerization inhibitor | | | | | 0.1 | 0.1 | 0.1 | 0.1 | 0.1 |
| Total | | | | | | 100.0 | 100.0 | \| 100.0 | \| 100.0 | 100.0 |
| Second monomer/First monomer | | | | | | - | - | - | - | - |
| AO polyfunctional (second)/composition (% by mass) | | | | | | 0.0 | 0.0 | 56.0 | 56.0 | 0.0 |

### 2. Evaluation-1 (inkjet)

Two independent drive heads of a piezo type inkjet head (KM 1024 iLHE-30 (360 dpi) manufactured by Konica Minolta, Inc.) were arranged so that nozzles would be alternately arranged to prepare a head module having a resolution of 720 dpi. The head module was filled with the composition 1.

Then, a voltage was applied to each inkjet head so that the droplet ejection amount would be 30 pL, the composition 1 was ejected so that a solid pattern of 150 mm × 150 mm would be printed, and the composition 1 was applied to a 2 mm thick acrylic resin plate as a base material. Thereafter, using an UVLED curing lamp (FireJet FJ 100 manufactured by Phoseon Technology), ultraviolet rays having a wavelength of 365 nm, an illuminance of 2 W/cm², and a light amount of 2000 mJ/cm² were irradiated to cure the composition 1 applied to the base material.

The composition 1 was further applied onto the cured composition 1 under the same conditions, and ultraviolet rays were irradiated under the same conditions to cure the composition 1 applied. This operation was repeated to form a cured product having a thickness of 1000 µm.

Also, from each of compositions 2 to 34, a cured product having a thickness of 1000 µm was formed by the same operation.

Using the formed cured products, the prepared compositions 1 to 34 were evaluated as follows.

### 2-1. Luminance (part 1)

The luminance of each cured product was measured by a phosphorescent luminance measurement in accordance with JIS Z 9107 A: 2008. Specifically, the base material having each cured product (luminous formed body) was stored in a dark room for 48 hours or more, and then the cured product was irradiated with light using a normal light source fluorescent lamp D 65 at an illuminance of 200 lx for 20 minutes. The afterglow luminance of the cured product 20 minutes after the light irradiation was stopped was measured using a luminance meter (LS 110 manufactured by Konica Minolta, Inc.). Based on the measured luminance, the luminance of the cured product obtained from each composition was evaluated according to the following criteria.
⊙: The luminance was 150 mcd/m² or more.
∘: The luminance was 100 mcd/m² or more and less than 150 mcd/m².
△: The luminance was 50 mcd/m² or more and less than 100 mcd/m².
×: The luminance was less than 50 mcd/m².

### 2-2. Luminance (part 2)

The luminance of each cured product was measured by a phosphorescent luminance measurement in accordance with JIS Z 9107 A: 2008. Specifically, the base material having each cured product (luminous formed body) was stored in a dark room for 48 hours or more, and then the cured product was irradiated with light using a normal light source fluorescent lamp D 65 at an illuminance of 4500 lx for 15 minutes. The afterglow luminance of the cured product 2 seconds after the light irradiation was stopped was measured using a luminance meter (LS 110 manufactured by Konica Minolta, Inc.). Based on the measured luminance, the luminance of the cured product obtained from each composition was evaluated according to the following criteria.
⊙: The luminance was 15 cd/m² or more.
∘: The luminance was 10 cd/m² or more and less than 15 cd/m².
△: The luminance was 5 cd/m² or more and less than 10 cd/m².
×: The luminance was less than 5 cd/m².

### 2-3. Adhesion

In accordance with the cross-cut method of JIS K 5600, a grid-like cut was made on each cured product having a film thickness of 20 µm, and adhesive tape was attached to the cut portion and peeled off. The peeling state of the cured product after peeling was observed, and the ratio of the number of squares remaining after tape peeling to the number of squares formed by making cuts (attachment residual ratio) was determined. Based on the obtained attachment residual ratio, the adhesion of the cured product obtained from each composition was evaluated according to the following criteria.
⊙: The attachment residual ratio was 95% or more.
∘: The attachment residual ratio was 90% or more and less than 95%.
△: The attachment residual ratio was 70% or more and less than 90%.
×: The attachment residual ratio was less than 70%.

### 2-4. Flexibility

The base material deformation was evaluated for each cured product having a film thickness of 1 mm on a base material of a 160 mm × 160 mm acrylic plate having a thickness of 2 mm.
∘: No base material deformation
△: The base material was slightly deformed.

### 2-5. Acid resistance

Each cured product was immersed in a 3% aqueous hydrochloric acid solution for 24 hours, taken out, washed with water, and dried, and then the luminance of the cured product was measured in the same manner as in the Luminance (part 1).
⊙: The luminance was 90% or more and 100% or less of that before the weatherability evaluation.
∘: The luminance was 70% or more and less than 90% of that before the weatherability evaluation.
△: The luminance was 50% or more and less than 70% of that before the weatherability evaluation.
×: The luminance was less than 50% of that before the weatherability evaluation.

### 2-6. Weatherability

Each cured product was subjected to a weatherability test in accordance with JIS B 7753: 2007. Specifically, irradiation with light at an irradiance in a wavelength range of 300 nm or more and 700 nm or less of 255 W/m² for 102 minutes and spraying with water for 18 minutes were continuously performed for 78 hours on a base material having each cured product (luminous formed body) using a Sunshine Carbon Arc Lamp-type accelerated weatherability tester (Sunshine weathermeter S80 manufactured by Suga Test Instruments Co.,Ltd.). Thereafter, the luminance of each cured product was measured by the same method as in the "Luminance (part 1)" described above. Based on the measured luminance, the weatherability of the cured product obtained from each composition was evaluated according to the following criteria.
⊙: The luminance was 90% or more and 100% or less of that before the weatherability evaluation.
∘: The luminance was 70% or more and less than 90% of that before the weatherability evaluation.
△: The luminance was 50% or more and less than 70% of that before the weatherability evaluation.
×: The luminance was less than 50% of that before the weatherability evaluation.

The evaluation results are shown in Tables 5 to 8.

**[Table 5]**

| | Example | Example | Example | Example | Example | Example | Example | Example | Example | Example | Example | Example |
|---|---|---|---|---|---|---|---|---|---|---|---|---|
| | Composition 1 | Composition 2 | Composition 3 | Composition 4 | Composition 5 | Composition 6 | Composition 7 | Composition 8 | Composition 9 | Composition 10 | Composition 11 | Composition 12 |
| Luminance (part 1) | Δ | 0 | 0 | 0 | 0 | 0 | 0 | 0 | 0 | 0 | 0 | 0 |
| Luminance (part 2) | Δ | Δ | Δ | Δ | Δ | Δ | Δ | 0 | 0 | 0 | 0 | 0 |
| Adhesion | Δ | 0 | 0 | 0 | 0 | 0 | Δ | 0 | 0 | 0 | Δ | Δ |
| Flexibility | Δ | Δ | 0 | 0 | 0 | 0 | Δ | 0 | 0 | 0 | 0 | Δ |
| Acid resistance | Δ | Δ | Δ | Δ | Δ | Δ | Δ | Δ | Δ | Δ | Δ | Δ |
| Weatherability | Δ | Δ | Δ | Δ | Δ | Δ | Δ | Δ | Δ | Δ | Δ | Δ |

**[Table 6]**

| | Example | Example | Example | Example | Example | Example | Example | Example | Example | Example | Example | Example |
|---|---|---|---|---|---|---|---|---|---|---|---|---|
| | Composition 13 | Composition 14 | Composition 15 | Composition 16 | Composition 17 | Composition 18 | Composition 19 | Composition 20 | Composition 21 | Composition 22 | Composition 23 | Composition 24 |
| Luminance (part 1) | 0 | 0 | 0 | 0 | 0 | 0 | 0 | ⊙ | ⊙ | ⊙ | ⊙ | ⊙ |
| Luminance (part 2) | Δ | Δ | Δ | Δ | Δ | Δ | Δ | 0 | 0 | ⊙ | ⊙ | ⊙ |
| Adhesion | 0 | 0 | 0 | 0 | 0 | 0 | 0 | 0 | 0 | 0 | ⊙ | ⊙ |
| Flexibility | 0 | 0 | 0 | 0 | 0 | 0 | 0 | 0 | 0 | 0 | 0 | 0 |
| Acid resistance | 0 | Δ | 0 | 0 | ⊙ | ⊙ | ⊙ | ⊙ | ⊙ | ⊙ | ⊙ | ⊙ |
| Weatherability | Δ | Δ | Δ | Δ | 0 | ⊙ | 0 | ⊙ | ⊙ | ⊙ | ⊙ | ⊙ |

**[Table 7]**

| | Example | Example | Example | Example | Example |
|---|---|---|---|---|---|
| | Composition 25 | Composition 26 | Composition 27 | Composition 28 | Composition 29 |
| Luminance (part 1) | ○ | ○ | ⊙ | ⊙ | ⊙ |
| Luminance (part 2) | Δ | Δ | ⊙ | ⊙ | ⊙ |
| Adhesion | ⊙ | ⊙ | ⊙ | ⊙ | ⊙ |
| Flexibility | ○ | ○ | ○ | ○ | ○ |
| Acid resistance | ○ | ○ | ⊙ | ⊙ | ⊙ |
| Weatherability | Δ | Δ | ⊙ | ⊙ | ⊙ |

**[Table 8]**

| | Comparative Example | Comparative Example | Comparative Example | Comparative Example | Comparative Example |
|---|---|---|---|---|---|
| | Composition 30 | Composition 31 | Composition 32 | Composition 33 | Composition 34 |
| Luminance (part 1) | × | × | × | × | × |
| Luminance (part 2) | × | × | × | × | × |
| Adhesion | Δ | Δ | ○ | ○ | Δ |
| Flexibility | Δ | Δ | Δ | Δ | Δ |
| Acid resistance | Δ | Δ | Δ | Δ | Δ |
| Weatherability | Δ | Δ | Δ | Δ | Δ |

As is apparent from Tables 1 to 8, each luminous cured product formed from an active energy ray-curable composition containing a first monomer that is an active energy ray-curable compound having a refractive index of 1.49 or more and 1.65 or less and a luminous pigment had a higher luminance than each luminous cured product formed from an active energy ray-curable composition not containing a first monomer.

### 3. Evaluation-2 (dispenser)

A cured product having a thickness of 1000 µm was formed from each of composition 3, composition 26, and composition 30 in the same manner as described above except that a microspray valve manufactured by SSI Japan was used as a dispenser instead of the inkjet head.

Using the formed cured products, the prepared composition 3, composition 26, and composition 29 were evaluated in the same manner as in the formation of the cured films by inkjet method.

The evaluation results are shown in Tables 9.

**[Table 9]**

| | Example | Example | Example |
|---|---|---|---|
| | Composition 3 | Composition 26 | Composition 29 |
| Luminance (part 1) | ○ | ○ | ⊙ |
| Luminance (part 2) | Δ | Δ | ⊙ |
| Adhesion | ○ | ⊙ | ⊙ |
| Flexibility | ○ | ○ | ○ |
| Acid resistance | Δ | ○ | ⊙ |
| Weatherability | Δ | Δ | ⊙ |

As is apparent from Table 9, even when the cured products were formed using a dispenser, the same tendencies as when the cured products were formed by inkjet method were observed.

According to the present invention, a luminous cured product having a higher luminance can be produced. Therefore, the present invention is expected to further expand applications to which luminous compositions can be applied and contribute to further development in the art.

Although embodiments of the present invention have been described and illustrated in detail, the disclosed embodiments are made for purposes of illustration and example only and not limitation. The scope of the present invention should be interpreted by terms of the appended claims.

## Claims

1. An active energy ray-curable composition, comprising:
a first monomer that is an active energy ray-curable compound having a refractive index of 1.49 or more and 1.65 or less; and
a luminous pigment.

2. The active energy ray-curable composition according to claim 1,
wherein the first monomer includes a monomer having an aromatic ring.

3. The active energy ray-curable composition according to claim 1,
wherein the first monomer includes a monofunctional monomer.

4. The active energy ray-curable composition according to claim 1,
wherein the first monomer includes a monomer having an alkylene oxide group.

5. The active energy ray-curable composition according to claim 1,
wherein a content of the first monomer is 20% by mass or more and 80% by mass or less based on a total mass of the active energy ray-curable composition.

6. The active energy ray-curable composition according to claim 1, comprising:
a second monomer that is an active energy ray-curable compound having a refractive index of less than 1.49,
wherein a ratio of a total mass of the second monomer to a total mass of the first monomer (second monomer/first monomer) is 0.5 or more and 15 or less.

7. The active energy ray-curable composition according to claim 1, comprising:
a second monomer that is an active energy ray-curable compound having a refractive index of less than 1.49,
wherein the second monomer includes a monomer having an alkylene oxide group.

8. The active energy ray-curable composition according to claim 7,
wherein the second monomer includes a polyfunctional monomer.

9. The active energy ray-curable composition according to claim 7,
wherein a content of the second monomer is 20% by mass or more and 50% by mass or less based on a total mass of the active energy ray-curable composition.

10. The active energy ray-curable composition according to claim 7,
wherein the second monomer has a propylene oxide group as the alkylene oxide group.

11. The active energy ray-curable composition according to claim 1, comprising:
an intramolecular hydrogen abstraction type photoinitiator.

12. The active energy ray-curable composition according to claim 11, further comprising:
an acylphosphine oxide photoinitiator,
wherein a content of the acylphosphine oxide photoinitiator is more than 0% by mass and 3% by mass or less based on a total mass of the active energy ray-curable composition, preferably,
wherein a content of an intermolecular hydrogen abstraction type photoinitiator is 0% by mass or more and 0.8% by mass or less based on a total mass of the active energy ray-curable composition.

13. The active energy ray-curable composition according to claim 1,
wherein the active energy ray-curable composition is an inkjet ink.

14. A method for producing a luminous cured product, comprising the steps of:
applying the active energy ray-curable composition according to any one of claims 1 to 13 to a base material; and
curing the applied active energy ray-curable composition by irradiation with an active energy ray, preferably,
wherein the application of the active energy ray-curable composition to a base material is performed by an inkjet method.

15. A luminous formed body, comprising: a luminous cured product obtained by curing the active energy ray-curable composition according to any one of claims 1 to 13.
